Europäisches Patentamt

European Patent Office

Office européen des brevets

(11) Veröffentlichungsnummer: **0 022 908**
**A1**

(12) **EUROPÄISCHE PATENTANMELDUNG**

(21) Anmeldenummer: **80102712.9**

(22) Anmeldetag: **16.05.80**

(51) Int. Cl.³: **G 03 B 23/04**

(30) Priorität: **20.07.79 DE 2929327**

(43) Veröffentlichungstag der Anmeldung:
**28.01.81 Patentblatt 81/4**

(84) Benannte Vertragsstaaten:
**AT BE CH DE FR GB IT LI LU NL SE**

(71) Anmelder: **Rollei-Werke Franke & Heidecke GmbH + Co KG**
**Salzdahlumer Strasse 196**
**D-3300 Braunschweig(DE)**

(72) Erfinder: **Prochnow, Claus**
**Lange Strasse 38**
**D-3300 Braunschweig(DE)**

(74) Vertreter: **Pretzell, Hellmut, Dipl.-Ing.**
**Salzdahlumer Strasse 196**
**D-3300 Braunschweig(DE)**

(54) **Überblend-Stehbild-Doppelprojektor.**

(57) Überblend - Stehbild - Doppelprojektor mit gemeinsamem Magazin (16), dem die Dias (12) entnommen, abwechselnd den beiden Projektoren zugeführt und nach der Projektion wieder in ihre ursprünglichen Gefache eingeordnet werden; die Dia - Wechselgreifer - Ebenen sind um eine Gefachteilung oder um die halbe Magazinlänge versetzt, bei entsprechender Einordnung der Dias, so daß sich einfache Schaltschritte ergeben; die bei Doppel - Projektoren, die abwechselnd mit einem Magazin (16) zusammenarbeiten, erforderliche Pilgerschritt - Schaltung des Magazins, wird dadurch vermieden, daß die Dia - Wechselgreifer (1) mit einem Tastfinger (20) gekuppelt sind, welcher bei Diaentnahme in das geleerte Gefach überführt wird und dort bis zum Rückhub des Diawechselgreifers (1) als Führung für diesen verbleibt, so daß eine Rückführung des Dias (12) in sein Originalgefach gesichert ist, unabhängig von einer zwischenzeitlichen Weiterschaltung des Magazins (16). Damit ergibt sich nicht nur eine wesentliche Vereinfachung des Greiferantriebs an sich, sondern auch Möglichkeit, von Vorwärts- auf Rückwärtsschaltung durch einfache Umschaltung des Antriebsmotors überzugehen.

./...

Croydon Printing Company Ltd.

Fig.1

0022908

ROLLEI - WERKE      18.07.1979
Franke & Heidecke
GmbH & Co KG      A 1161 EU
Braunschweig

## Überblend - Stehbild - Doppelprojektor

Die Erfindung betrifft Überblend - Stehbild - Doppelpro=
jektoren mit einem gemeinsamen Magazin, dem die Dias
fortlaufend und einzeln aufeinanderfolgend entnommen und
nach der Projektion wieder in ihre ursprünglichen Gefache
eingeordnet werden; dabei müssen die Bildfenster beider
Projektoren für die Dauer des Überblendvorgangs mit Dias
belegt sein.

Bei den bisher bekannten Projektoren mußte zu diesem Zweck
das Magazin nach einem Pilgerschrittprogramm vor- und
zurückbewegt werden. Das hierzu benötigte Schaltgetriebe
wurde noch aufwendiger, wenn das gemeinsame Magazin
seitlich neben beiden Projektoren angeordnet wurde und
die Wechselschieberebene fest lag, weil dann zusätzlich
mindestens der eine der beiden Projektoren in axialer
Richtung bewegt werden mußte und mit dieser Bewegung
in den getrieblichen Dia - Wechselzyklus eingeschlossen
werden mußte. Diese zusätzlich axiale Beweglichkeit
des einen Projektors oder beider Projektoren konnte
zwar vermieden werden, wenn das gemeinsame Magazin
zwischen beiden Projektoren angeordnet wurde und die
Bildfenster- bzw. die Dia-Wechselschieberebenen um eine
Magazingefachteilung versetzt wurden. Das Gleiche war der
Fall bei einseitiger Anordnung der beiden Projektoren
seitlich vom Magazin, wenn die Projektoren in Achsrichtung
oder parallel zur Schaltrichtung des gemeinsamen Magazins

- 2 -

versetzt oder gestaffelt angeordnet werden, damit der
Diawechselschieber oder -greifer des äußeren Projektors
durch den zwischen ihm und dem Magazin liegenden Projek=
tor nicht behindert wird; ein solcher Doppelprojektor
erfordert ein Magazin, dessen Länge doppelt so groß ist,
wie der axiäle Projektor- oder Bildfensterabstand
und eine besondere Einordnung der Dias in diesem Magazin,
das heißt der Dias 1,3 , 5,.... in der ersten, und der
Dias 2, 4, 6.... in der zweiten Magazinhälfte.

Selbst wenn durch diese verschiedenen Maßnahmen das
Projektorgetriebe vereinfacht wird,  verbleibt es bei
dem Erfordernis, für die Magazinschaltung ein mehr oder
weniger komplexes Pilgerschritt - Schaltwerk vorzusehen;
hinzukommt hierbei ein zusätzlicher getrieblicher
Aufwand, wenn das Magazin vor dem vollständigen Durch=
lauf auswechselbar sein soll, oder wenn die Schalt=
richtung umkehrbar sein soll, ohne daß das Antriebswerk
außer Tritt geraten darf.

Durch die Erfindung soll bei einem Doppelprojektor der
eingangs angegebenen Gattung der Diawechsler so aufgebaut
werden, daß das Magazin nur in einzelnen einfachen
Schaltschritten  weitergeschaltet zu werden braucht,
bei entsprechender Einordnung der Dias im Magazin oder
in zwei hintereinander liegenden Magazinen sogar nur
in einem einfachen Schaltschritt je zwei aufeinanderfolgen=
de Dias. Abgesehen von der dadurch erreichten erheblichen
Reduktion des getrieblichen Aufwands ergibt sich eine
starke Vereinfachung der Umschaltung des Vorwärts- und
Rückwärts - Transports des Magazins, sowie  eine Verein=
fachung  des Antriebs der Überblendungseinrichtung.

Zur Lösung dieser Aufgabe ist erfindungsgemäß der senkrecht zur Magazinlängsachse verschiebbare Diawechsel= greifer mit seinem Magazinseitigen Ende in Magazinbewe= gungsrichtung schwenkbar und elastisch mit einem zweiten Schieber derart gekuppelt, daß dessen Tastfinger bei der Diaentnahme zwischen die Gefachwände des geleerten Fachs überführt wird und dort bis zur Rückführung des Dia= wechselgreifers verbleibt. Die elastische Führung besteht zweckmäßiger Weise aus einem Stift an dem Wechselschieber und zwei parallelen Federbacken am Tastfingerschieber. Vorzugsweise ist der Tastfingerschieber zwecks starrer Ankupplung des Diagreiferschiebers mit einer Gabel zur Aufnahme des Stiftes ausgestattet.

Auf den Zeichnungen ist eine bevorzugte Ausführungsform der Erfindung dargestellt; im Einzelnen zeigt

Figur 1 den neuen Doppelschiebergreifer in Projektionsstellung, schaubildlich darge stellt,

Figur 2 den gleichen Greifer in Ansicht von oben,

Figur 3 den Doppelschiebergreifer in der Ruhe= stellung über dem Magazin,

Figur 4 ein Beispiel für die Anordnung feststehen= der Projektoren und des Magazins, und

Figur 5 das vollständige Triebwerk für die neuen Doppelschiebergreifer für diese Projektorenanordnung.

Der Bildwechselschieber 1 ist mit der Nabe 2 und den Schlitzführungen 3,4 auf den Führungsstangen 5,6,7, die zwischen den Gehäusewänden 8, 9 befestigt sind, in Pfeil= richtung " A " beweglich. Der Antrieb erfolgt durch eine Kurbelstange 10 am Zapfen 11. Die Schlitzführungen 3,4 lassen eine begrenzte Schwenkung des Schiebers 1 quer zur

- 4 -

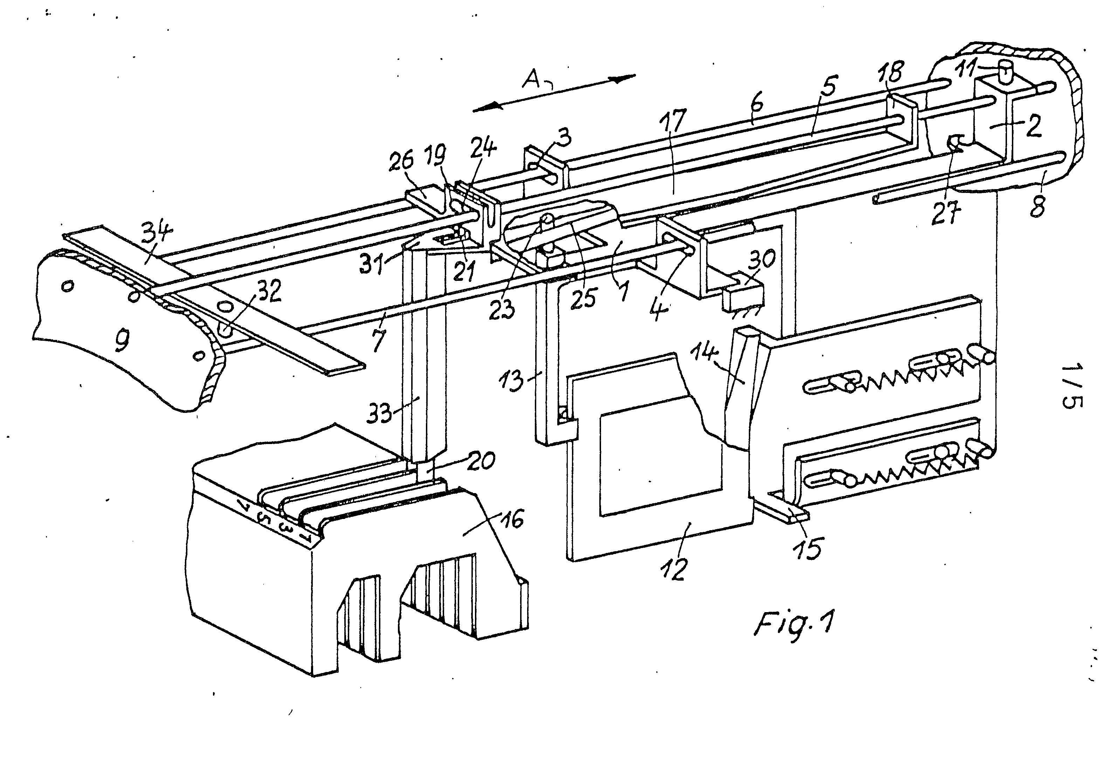

Längsrichtung um die Nabe 2 zu. Das Dia 12 wird zwischen dem Greiferarm 13 und der federnden Greiferbacke 14 ge= halten. Diese besitzt einen Anschlag 15, welcher beim Rückführen des Dias 12 in das Magazin 16 an dieses an= stößt und dadurch das Dia 12 im Magazin 16 freigibt. Insoweit ist dies eine gebräuchliche Anordnung. Ein zweiter Schieber 17 ist mit der Nabe 18 am rechten Ende und mit der Schlitzführung 19 am linken Ende auf der Führungsstange 5 geführt und auf diese Weise ebenfalls begrenzt schwenkbar. Am linken Ende des Schiebers 17 befindet sich ein Tastfinger 20, der in die Magazingefache von oben hineinragt, und weiterhin eine Längsnut 21 mit Abschrägungen 22 in der Höhe des Stiftes 23 des Wechsel= schiebers 1. Gleichfalls in der Höhe dieses Stiftes 23 trägt der Schieber 17 noch zwei parallele Federblätter 25 als Führung für den Stift 23, die bei paralleler Stellung der Schieber 1 und 17 spannungslos ist. Die Schlitzführung 19 enthält zweckmäßig eine Wellenfeder 24 zur Kennzeich= nung der drei Raststellungen der Schlitzführung 19 auf der Führungsstange 5. Die Anschläge 30 haben die Aufgabe, das Dia 12 in der Projektionsstellung senkrecht und parallel zur Bildfensterebene zu fixieren. Das vordere Ende des Schiebers 17 läuft in einer Platte 26 aus, die auf den Führungen 6 und 7 aufliegt und damit Längs- und Querbewe= gungen des Schiebers 17 zuläßt. Der Schieber 17 endet in einer keilförmigen Nase 31, die im Zusammenwirken mit einem Anschlagstift 32 den Schieber 17 in seine Grund= stellung zurückführt, wenn der Stiftfinger 20 bei Bewegung nach links den Magazinbereich verlassen hat. Zwischen den Haken 27 und 28 des Wechselschiebers 1 und der Schiebers 17 ist eine Zugfeder 29 eingehängt, derart, daß der Schieber 1 bei Bewegung nach rechts den Schieber 17 mitnimmt, bis die Stellung gemäß Figur 1 erreicht ist, in welcher die An= schläge 25 wirksam werden und das Dia in Projektionsstellung

- 5 -

ist, und der Tastfinger 20 das Magazin 16 nach rechts noch nicht verlassen hat. Aus Sicherheitsgründen ist der Tastfinger 20 oberhalb der Magazingefachkante um die Gefachwandstärken verdickt und mit Abweisschrägen 33 versehen, damit das Einführen des Tastfingers 20 in die Magazingefache nicht durch benachbarte Dias gestört werden kann. Der Anschlagstift 32 ist auf einem Schieber 34 quer zu den Führungen 5, 6, 7 am Projektorgehäuse verstellbar, derart, daß nach Wahl die Nase 31 am Schieber 17 nach der einen oder anderen Seite abgelenkt werden kann, wenn der Tastfinger 20 das Magazin nach links verlassen hat.

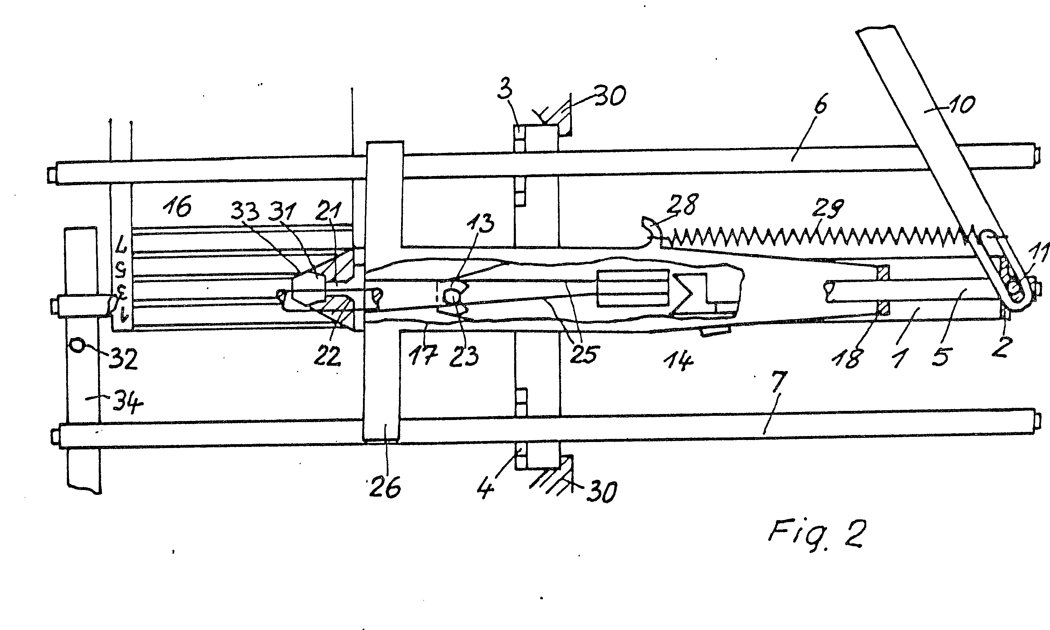

Die Wirkungsweise ist folgende: In Figur 1 und 2 befindet sich das Dia 12 in Projektionsstellung und der Tastfinger 20 in dem Magazingefach, aus dem das Dia stammt. Wird das Magazin 16 in diesem Stadium um einen Schritt weitergeschaltet, so nimmt es den Tastfinger 20 mit und verschwenkt den Schieber 17 um seine Nabe 18, wobei er mit seiner Wellenfeder 24 auf der Führung 5 einrastet. Dabei wird das Federpaar 25 einseitig gespannt. Es kann jedoch den Bildwechselschieber 1 über den Stift 23 nicht beeinflussen, weil dessen Lage durch die Anschläge 30 fixiert ist. Wenn nunmehr der Wechselschieber 1 durch die Kurbelstange 10 nach links bewegt wird, wird er aus den Anschlägen 30 ausgehoben, so daß die Federblätter 25 nunmehr den Schieber 1 am Stift 23 so verschwenken können, daß der Stift 23 bei Weiterbewegung des Schiebers 1 über die Abschrägungen 22 in die Nut 21 des Schiebers 17 gleiten kann. Damit sind die Schieber 1 und 17 starr miteinander gekuppelt, so daß der Greifer 13, 14 mit dem Dia 12 in das durch den Tastfinger bestimmte Magazingefach geleitet wird. Wenn das Dia die Ruhestellung im Magazin erreicht hat, stößt der Anschlag 15 der federnden Greiferbacke 14 an das Magazin an und gibt das Dia frei. Die Schieber 1 und 17 werden weitergeschoben, bis der

- 6 -

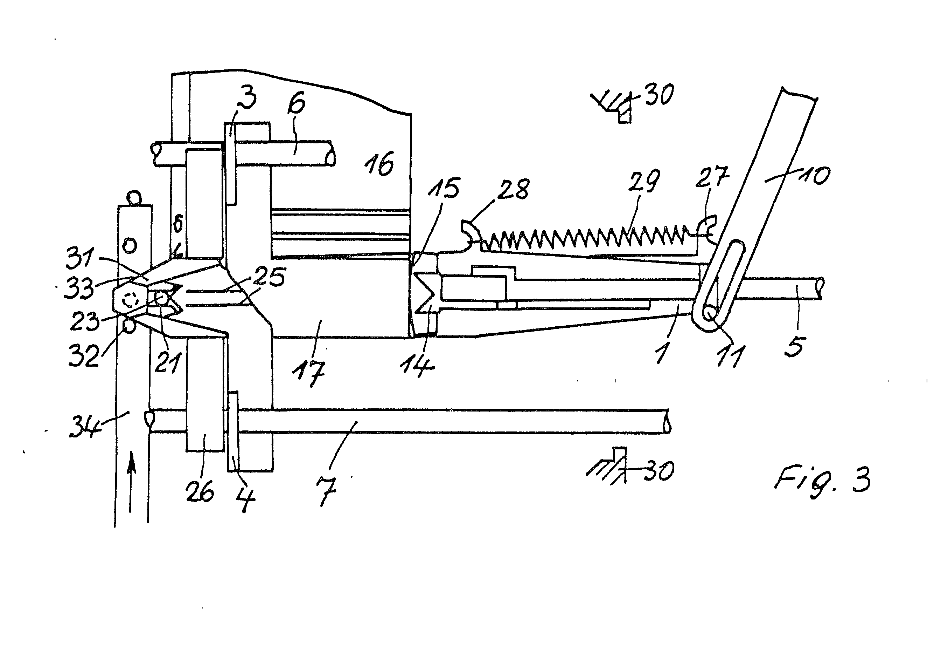

Tastfinger 20 das Magazin voll durchquert hat, die keilförmige Greifernase 31 auf den Anschlagstift 32 gestoßen ist und Taststift 20 und Greifer 13, 14 vor das nächste Magazingefach verschwenkt hat. Diese Stellung ist aus Figur 3 ersichtlich.

Nunmehr wird die Bewegungsrichtung des Greifers 1 umge= kehrt und dabei das nächste Dia dem Magazin entnommen und in das Bildfenster überführt. Der Schieber 17 wird dabei über die Feder 29 mitgenommen, jedoch nur so weit, daß sein Tastfinger 20 in dem soeben geleerten Magazin= fach verbleibt. Dabei trennt sich die Stift - Schlitz - Verbindung 23, 21 zwischen den Armen 1 und 17 und der Stift 23 gleitet zwischen die Federblätter 25.

Allgemein wird also erreicht, daß ein Dia, welches dem Magazin entnommen und zwecks Projektion in das Bildfen= ster gebracht wurde, wieder direkt in sein ursprüngliches Gefach zurücktransportiert wird, unabhängig davon, ob das Magazin, aus welchem Grunde auch immer, in der Zwischenzeit vorwärts oder rückwärts weitergeschaltet wurde. Am Günstigsten wirkt sich die Erfindung bei einem Doppelprojektor mit feststehenden, in Achsrichtung um eine halbe Magazinlänge versetzten Bildbühnen aus. Sinngemäß gilt das auch für den Fall zweier gleicher, hintereinanderliegender Magazine mit gemeinsamem Schalt= antrieb.

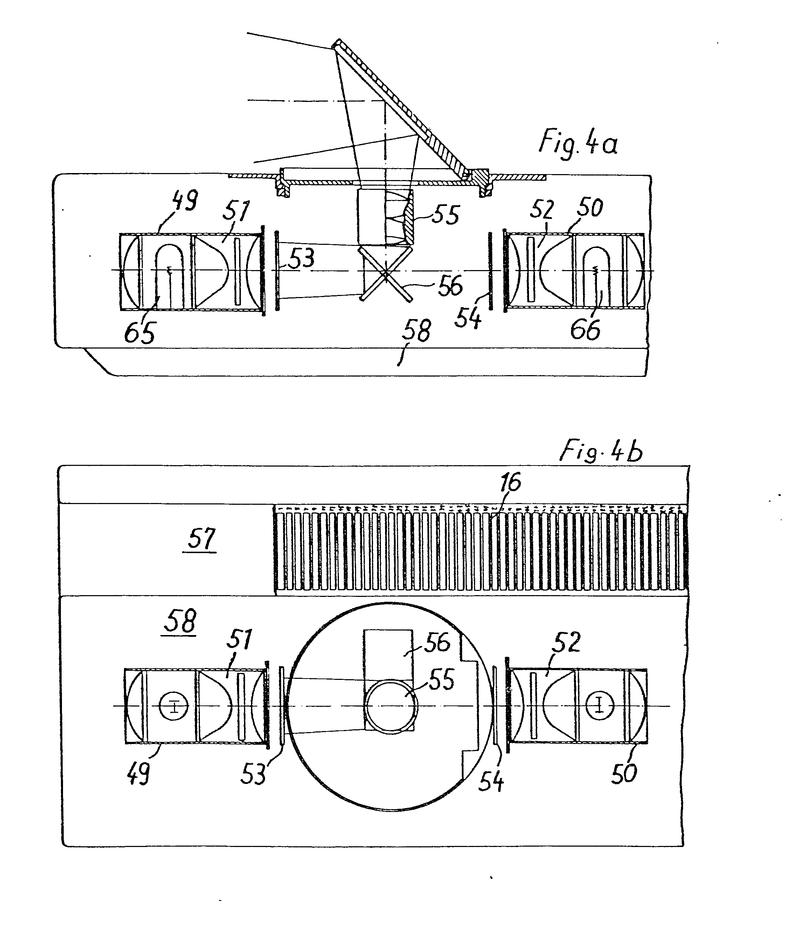

Einen solchen Projektoraufbau zeigt Figur 4. Zwei Projektoren, bestehend aus Lampengehäusen 49, 50, Be= leuchtungsoptik 51, 52, Bildfensterführungen 53, 54 und Objektiven 55, 56 sind mit der Magazinführung 57 auf einer gemeinsamen Grundplatte 58 angebracht. Die beiden Projektoren sind in Achsrichtung versetzt,

0022908

mit den Bildfenstern einander zugekehrt, wobei zwischen den Bildfenstern ausreichend Raum für den Ablenkspiegel 55 verbleiben muß. Um das Magazin voll auszunutzen, ist seine Länge zweckmäßigerweise doppelt so groß, wie der Abstand der Bildfensterführungen 53, 54 und umgekehrt. In die vordere, in Fig. 4a rechte Hälfte des Magazins werden die Dias in der ungeradzahligen Folge 1, 3, 5, 7... und in die hintere Magazinhälfte seitenverkehrt dazu in geradzahliger Folge 2, 4, 6,,,, eingeordnet.

Die beiden Projektoren können vollkommen identisch aufge= baut sein; auch im Antrieb kann weitgehende Übereinstimmung beziehungsweise Symmetrie der beiden Projektoren vorgese= hen werden.

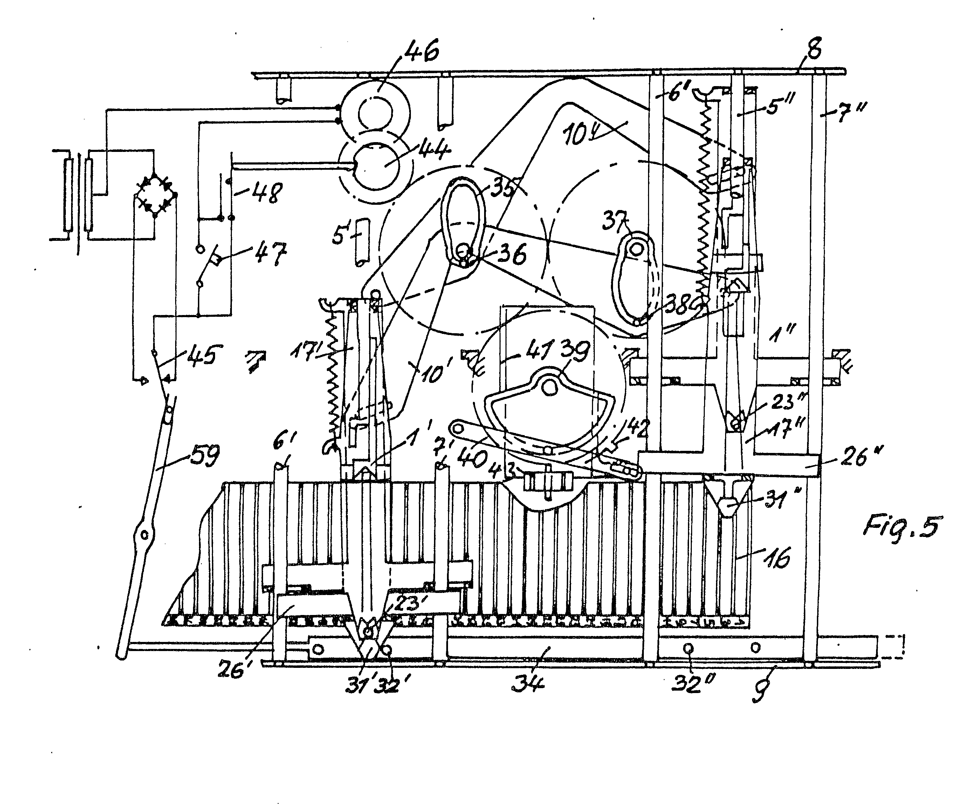

Durch diese Symmetrie ergibt sich in Verbindung mit identischen Doppelhebelgreifern nach der Erfindung für deren Antrieb und das Programmschaltwerk des Überblend - Doppelprojektors eine außerordentlich einfache Lösung, die zusätzlich noch betriebliche Vorteile bringt, wie die einfache Umschaltbarkeit von Vorwärts= auf Rückwärtslauf. Ein Beispiel eines solchen Schaltwerks ist in Figur 5, teilweise schematisch dargestellt. Soweit Übereinstimmung besteht, wurden die Bezugszeichen für die gleichen Teile aus den vorhergehenden Abbildungen beibehalten; wo gestalterische, nicht-funktionelle Unter= schiede bestehen, wurden Bezugszahlen mit den Indices ' und '' verwen=det.

Der Antrieb der Kurbelstangen 10' und 10'' erfolgt durch die Kurbelschleifen 35, 37 über Führungsrollen 36,38. Eine weitere Kurbelschleife 39 steuert über einen Hebel 40 den beweglichen Überblendspiegel 41 und betätigt durch einen Nocken 42

das Magazinschaltrad 43. Alle drei Kurbelschleifen 35, 37, 39 sind über gleiche Zahn-räder miteinander gekuppelt und führen während eines Zyklus eine volle Umdrehung aus. Während dieses Zyklus wird die Magazinschaltung einmal betätigt, das Magazin also um einen Schritt weiterge= schaltet.Zwischen den Motor 46 und das Kurbelschleifen= zahnradgetriebe ist ein Zahnrad von halbem Durchmesser geschaltet, welches demzufolge während des vollständigen Zyklus zweimal dreht. Dieses Zahnrad ist mit einer Nockenscheibe 44 verbunden, welche einen Haltekontakt 48 bei jeder Umdrehung unterbricht. Durch Schließen der Taste 47 wird der Motor 46 eingeschaltet; unmittelbar nach dem Anlaufen schließt die Nockenscheibe den Haltekontakt 48, der die Taste 47 überbrückt, die demnach wieder losgelassen werden kann. Nach einer Umdrehung der Nockenscheibe 44 wird der Kontakt 48 wieder geöffnet und schaltet den Motor 46 ab.

Durch die symmetrische Ausbildung der den Hauptantrieb bewerkstelligenden Kurbelschleifen 35, 37 und deren Kongruenz untereinander wird für beide Wechselgreifer 1 das gleiche um 180 Grad versetzte Programm eingehalten, ganz gleich, ob der Antrieb vorwärts oder rückwärts läuft. Es genügt also zur Umschaltung von Vorwärts- auf Rückwärtsschaltung das einfache Umpolen des Gleichstrom= motors durch den Schalter 45; diese Umschaltung kann sogar während des laufenden Diawechselvorgangs erfolgen, selbst unmittelbar nach dem Weiterschaltungsschritt des Magazins, weil die Rückführung der außerhalb des Magazins befindlichen Dias durch die erfindungsgemäßen Wechsel= schieber in ihre zuständigen Gefache jederzeit sicher= gestellt ist. Zur Ausrichtung der Wechsekschieber 1, 17 auf das nächstfolgende Entnahmegefach des Magazins durch die Anschlagstifte 32 für die Nasen 31 ist der Schieber 34 mit den Stiften 32 über einen Hebel mit dem

59)

- 9 -

Umschalter 45 verbunden, damit automatisch die richtige Abweisschräge 33 der Keilnase 31 wirksam wird.

Die Anwendung der Erfindung auf den beschriebenen Projektor - Typ ergibt eine optimale Vereinfachung hinsichtlich des Triebwerks, eine hohe Betriebssicher= heit und einen hohen Schutz gegen Falschbedienungen. Es ist indessen denkbar, daß die durch die Erfindung gegebene Möglichkeit, den Magazinschalttakt an eine fast beliebige Stelle des Projektionszyklus verlegen zu können, auch bei anderen Projektortypen zu Triebwerk= vereinfachungen oder Funktionsverbesserungen führen kann

R o l l e i - W e r k e
Franke & Heidecke
GmbH & Co KG
Braunschweig

**0022908**

18.07.1979

A 1161 EU

Patentansprüche

1. Überblend - Stehbild - Doppelprojektor mit gemeinsamem Magazin, dem die Dias fortlaufend einzeln und aufeinanderfolgend entnommen und nach der Projektion wieder in ihre ursprünglichen Gefache eingeordnet werden, dadurch gekennzeichnet, daß der senkrecht zur Magazinlängsachse verschiebbare Dia - Wechselgreifer ( 1 ) mit seinem magazinseitigen Ende in Magazinschaltrichtung schwenkbar und elastisch mit einem zweiten Schieber ( 17 ) kuppelbar ist, derart, daß dessen Tastfinger ( 20 ) bei der Diaentnahme zwischen die Gefachwände überführt wird und dort bis zum Rückhub des Diawechselgreifers ( 1 ) verbleibt.

2. Überblend - Stehbild - Doppelprojektor nach Anspruch 1, dadurch gekennzeichnet, daß die elastische Führung aus einem Stift ( 23 ) an dem Wechselschieber ( 1 ) und zwei parallelen Federbacken ( 25 ) am Tastfingerschieber ( 17 ) besteht.

3. Überblend - Stehbild - Doppelprojektor nach Anspruch 2, dadurch gekennzeichnet, daß der Tastfingerschieber ( 17 ) zur starren Ankupplung des Diagreiferschiebers ( 1 ) mit einer Gabel ( 21 ) zur Aufnahme des Stiftes ( 23 ) ausgestattet ist.

4. Überblend - Stehbild - Doppelprojektor nach einem der Ansprüche 1 bis 3, gekennzeichnet durch eine Kupplungsfeder ( 29 ) zwischen Greiferschieber ( 1) und Tastfingerschieber ( 17 ).

5. Überblend - Stehbild - Doppelprojektor nach einem der Ansprüche 1 bis 4, dadurch gekennzeichnet, daß die Dicke des Tastfingers (20 ) der Gefachbreite ent-

- 2 -

spricht und im Bereich der herausstehenden Dias
um die Gefachwandstärken erhöht ist.

Fig.1

Fig. 2

Fig. 3

*Fig. 4a*

49  51  55  52  50

53  56  54

65  58  66

*Fig. 4b*

16

_57_

_58_  51  56  55  52

49  53  54  50

Fig.5

0022908

Nummer der Anmeldung

EP 80102712.9

Europäisches
Patentamt

**EUROPÄISCHER RECHERCHENBERICHT**

| | EINSCHLÄGIGE DOKUMENTE | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| A | <u>DE - A1 - 2 829 426</u> (GEFITEC)<br>* Ansprüche ; Seiten 8-11 *<br><br>-- | 1-5 | G 03 B 23/04 |
| A | <u>DE - A - 2 123 841</u> (KODAK)<br>* Ansprüche *<br><br>-- | 1-5 | |
| A | <u>AT - B - 257 194</u> (VOIGTLÄNDER)<br>* Ansprüche 1-4; Fig. 5,6,7 *<br><br>-- | 1 | |
| A | <u>DE - B2 - 2 147 173</u> (LEITZ)<br>* Spalte 3, Zeile 24 -<br>Spalte 4, Zeile 32; Fig. 1-<br>5 *<br><br>---- | 1-5 | **RECHERCHIERTE SACHGEBIETE (Int. Cl. ³)**<br><br>G 03 B 23/00<br>G 03 B 21/00 |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

| Y | Der vorliegende Recherchenbericht wurde für alle Patentansprüche erstellt |
|---|---|

| Recherchenort | Abschlußdatum der Recherche | Prüfer |
|---|---|---|
| WIEN | 28-09-1980 | GRONAU |

EPA form 1503.1  06.78